# EUROPÄISCHE PATENTSCHRIFT

(11) **EP 2 956 985 B1**
(45) Veröffentlichungstag und Bekanntmachung des Hinweises auf die Patenterteilung: **28.02.2018**
(21) Anmeldenummer: 14728474.9
(22) Anmeldetag: 20.05.2014
(51) Int. Cl.: H01M 10/6568, H01M 10/667, H01M 10/663, H01M 10/613, H01M 10/66, H01M 10/6567, H01M 10/625, B60L 11/18

(54) **KÜHLANLAGE ZUR KÜHLUNG EINES ENERGIESPEICHERS UND EINES LADEREGLERS FÜR EIN FAHRZEUG MIT ELEKTRISCHEM ANTRIEB**
COOLING SYSTEM FOR COOLING AN ENERGY ACCUMULATOR AND A CHARGE CONTROLLER FOR A VEHICLE WITH AN ELECTRIC DRIVE
SYSTÈME DE REFROIDISSEMENT D'UN ACCUMULATEUR D'ÉNERGIE ET D'UN RÉGULATEUR DE CHARGE POUR VÉHICULE AUTOMOBILE À PROPULSION ÉLECTRIQUE

(30) Priorität: 24.05.2013 DE 102013209706
(43) Veröffentlichungstag der Anmeldung: 23.12.2015
(73) Patentinhaber: Siemens Aktiengesellschaft, 80333 München (DE)
(72) Erfinder: NOACK, Maik, 15913 Spreewaldheide/OT Laasow (DE)
(86) Internationale Anmeldenummer: PCT/EP2014/060292
(87) Internationale Veröffentlichungsnummer: WO 2014/187797

(56) Entgegenhaltungen:
- DE-A1-102009 043 316
- DE-A1-102010 013 003
- DE-A1-102011 000 573
- DE-A1-102011 004 624
- DE-A1-102011 082 356
- DE-U1- 9 002 249

## Beschreibung

Die Erfindung betrifft ein Fahrzeug mit zumindest einem elektrischen Antrieb und zumindest einem Energiespeicher zur Energieversorgung des elektrischen Antriebs, wobei das Fahrzeug zumindest einen Stromabnehmer zur Aufladung des Energiespeichers mit elektrischer Energie aus einem ortsfesten Stromnetz umfasst, mit welchem Stromabnehmer der Energiespeicher über zumindest einen Laderichter zur geregelten Aufladung des Energiespeichers verbunden ist.

Ein Prototyp eines solchen Speichersystems ist in einem von der Siemens AG hergestellten Schienenfahrzeug des Personennahverkehrs mit dem Namen Combino beim Betrieb Metro Sul do Tejo in Lissabon eingesetzt und fungiert dort im Wesentlichen zur Aufnahme und temporären Speicherung nicht rückspeisbarer Bremsenergie. Als Energiespeicher umfasst das Fahrzeug eine Batterie und einen kapazitiven Speicher, bestehend aus mehreren Doppelschichtkondensatoren. Zur Kühlung der Batterie wird dort eine Wasser-Luft-Kühlanlage eingesetzt, welche die Batterie mit Wasser kühlt, wobei die Rückkühlung des Wassers mittels Wasser-Luft-Wärmetauscher erfolgt. Der Kondensatorspeicher hingegen wird mit Luft gekühlt, ebenso wie Laderichter und Bordnetzumrichter, für deren Kühlung jeweils eigene Luftwärmetauscher und Lüfter vorgesehen sind. Weitere passive Bauelemente, wie z.B. Glättungsdrosseln, sind entweder im Luftstrom der genannten Geräte angeordnet oder konvektionsgekühlt ausgeführt. Dieses System ist als Hybrid Energy Storage bekannt.

Die Druckschrift DE 10 2009 043 316 A1 offenbart ein elektrische betriebenes Fahrzeug mit einer Batterie, welche mit einem Kältemittelkreislauf eines Klimaanlagensystems derart gekoppelt ist, dass die Batterie als Wärmespeicher des Kältemittelkreislaufs dient. Die Batterie wird während ihrer Aufladung dazu vorab gekühlt oder aufgeheizt.

Der Erfindung liegt die Aufgabe zugrunde, ein kompakt und kostengünstig herzustellendes Fahrzeug der eingangs genannten Art vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Fahrzeug, insbesondere ein Schienenfahrzeug des Personenverkehrs, umfasst zumindest einen elektrischen Antrieb und zumindest einen wiederaufladbaren Energiespeicher, und fürderhin zumindest einen Laderichter und zumindest einen Stromabnehmer zur Aufladung des Energiespeichers mit elektrischer Energie aus einem ortsfesten Stromnetz, mit welchem Stromabnehmer der Energiespeicher über den zumindest einen Laderichter zur geregelten Auf- und Entladung des Energiespeichers verbunden ist. Darüber hinaus umfasst das Fahrzeug zur Kühlung des Energiespeichers und des Laderichters erfindungsgemäß eine zentrale Kühlanlage und zumindest einen geschlossenen Kühlkreislauf mit flüssigem Kühlmittel. Die Kühlanalage kann umgangssprachlich als Klimaanlage bezeichnet werden. Der elektrische Antrieb umfasst insbesondere zumindest einen Elektromotor zum Antrieb des Fahrzeugs.

Sowohl dem zumindest einen Energiespeicher, als auch dem zumindest einen Laderichter ist dabei jeweils zumindest ein Wärmetauscher zugeordnet. Erfindungsgemäß sind die Wärmetauscher in ein und demselben geschlossenen Kühlkreislauf angeordnet. Der mindestens eine Wärmetauscher des zumindest einen Laderichters ist, von der zentralen Kühlanlage ausgehend, vor dem mindestens einen Wärmetauscher des zumindest einen Energiespeichers angeordnet. Der gemeinsame Kühlkreislauf ist an die zentrale Kühlanlage angeschlossen, beispielsweise über zumindest einen zentralen Wärmetauscher der zentralen Kühlanlage. Die zentrale Kühlanlage umfasst, neben dem zentralen Wärmetauscher, weitergebildet zumindest einen Kondensator, mindestens einen Kompressor und mindestens einen Verdampfer. Gegebenenfalls umfasst sie fürderhin eine Drossel zwischen dem Kondensator und dem Verdampfer. Des Weiteren weist sie mindestens ein Gebläse auf. Alternativ ist der zentrale Wärmetauscher der zentralen Kühlanlage als passiver Flüssigkeits-Luft-Wärmetauscher ausgebildet, wodurch auf den Kondensator, den Kompressor und den Verdampfer verzichtet werden kann. Dadurch kann die Kühlleistung vergleichsweise erheblich herabgesetzt sein, was jedoch bei einem Einsatz von Energiespeichern mit größeren Temperaturbereichen jedoch ausreichend sein kann.

Im Allgemeinen besteht ein Kühlkreislauf aus Rohrleitungen und gegebenenfalls Umwälzpumpen. Ein im Kühlkreislauf zirkulierendes, flüssiges Kühlmittel wird an dem zumindest einen Energiespeicher und/oder an dem zumindest einen Laderichter als Wärmequellen vorbeigeführt, insbesondere durch die dem zumindest einen Energiespeicher und dem zumindest einen Laderichter zugeordneten Wärmetauscher, erwärmt sich dabei und gibt die aufgenommene Wärme an die zentrale Kühlanlage als Wärmesenke wieder ab. Für Anwendungen mit hohen Umgebungstemperaturen wird die Wärmesenke von einer Kältemaschine gebildet. Sind hohe Umgebungstemperaturen nicht präsent, könnte ein passiver Flüssigkeits-Luft-Wärmetauscher die Wärmesenke bilden. Wird die zentrale Kühlanlage invers betrieben, so bildet sie die Wärmequelle und der zumindest eine Energiespeicher und/oder der zumindest eine Laderichter bilden die Wärmesenken, so dass sie bei Umgebungstemperaturen die unterhalb ihrer eigenen liegen, aufgeheizt werden können. Dies kann z.B. im Abstellbetrieb der Fall sein. Alternativ umfasst das Fahrzeug zum Aufheizen des flüssigen Kühlmittels zumindest ein Heizelement, welches im zumindest einen Kühlkreislauf angeordnet ist. Zur Regelung des Kühlmitteldurchflusses durch einen vorgegebenen Wärmetauscher weist das Fahrzeug insbesondere zumindest ein Ventil auf, welches vor dem vorgegebenen Wärmetauscher im Kühlkreislauf angeordnet ist.

Der zumindest eine, geschlossene Kühlkreislauf mit flüssigem Kühlmittel umfasst weitergebildet zumindest eine Umwälzpumpe. Sind zwei oder mehrere Kühlkreisläufe vorgesehen, weist insbesondere jeder jeweils mindestens eine Umwälzpumpe auf. Kühlmittel sind zum Abtransport von Wärme eingesetzte Stoffe oder Stoffgemische. Ein flüssiges Kühlmittel liegt dabei zumindest bei Laborbedingungen (20°C, 1013mbar) in flüssiger Form vor.

Der zumindest eine Energiespeicher, insbesondere zumindest eine wiederaufladbare Batterie und/oder zumindest ein Kondensatorspeicher, kann mehrere Speicherelemente, beispielsweise galvanische Zellen oder mehrere Kondensatoren, umfassen. Der zumindest eine Energiespeicher ist insbesondere geeignet zur Speicherung von elektrischer Energie und kann auch als Stromspeicher bezeichnet werden. Gleichermaßen kann das Fahrzeug mehrere Laderichter aufweisen, insbesondere zur geregelten Auf- und/oder Entladung der Speicherelemente. Beispielsweise ist die Anzahl der Speicherelemente und der Laderichter gleich. Weitergebildet weist das Fahrzeug mehrere Wärmetauscher für den zumindest einen Energiespeicher auf und/oder das Fahrzeug umfasst mehrere Wärmetauscher für den zumindest einen Laderichter. Gemäß einer Ausführungsform umfasst der Energiespeicher mehrere Speicherelemente, welchen jeweils ein Wärmetauscher zugeordnet ist. Eine weitere Ausgestaltung sieht vor, dass das Fahrzeug mehrere Laderichter umfasst, welchen ebenfalls jeweils ein Wärmetauscher zugeordnet ist. Die Wärmetauscher für die Laderichter, wie auch die Wärmetauscher für die Speicherelemente, dienen insbesondere der Kühlung der Laderichter, respektive der Speicherelemente.

Weitere Varianten sind denkbar. So kann beispielsweise ein Wärmetauscher zwei oder mehreren Speicherelementen zugeordnet sein. Analog kann ein Wärmetauscher zwei oder mehreren Laderichtern zugeordnet sein.

Alternativ sind die Laderrichter und die Speicherelemente jeweils auf gemeinsamen, insbesondere voneinander unterschiedlichen und separat voneinander angeordneten, Kühlplatten angeordnet. Pro Kühlplatte sind ist dann wiederum zumindest einer oder mehrere Wärmetauscher in einem oder mehreren Kühlkreisläufen zur zentralen Klimaanlage vorgesehen.

Sind mehrere Wärmetauscher für den zumindest einen Energiespeicher und/oder für den zumindest einen Laderichter vorgesehen, weist der entsprechende Kühlkreislauf mehrere Verzweigungen auf. Die einzelnen Stränge des Kühlkreislaufs, welche durch eine Verzweigung entstehen und welche zu den einzelnen Wärmetauschern führen, werden jedoch später, insbesondere, von der zentralen Kühlanlage aus gesehen, nach den Wärmetauschern, wieder zusammengeführt, so dass von einem Kühlkreislauf gesprochen werden kann.

Zur Anpassung der Kühlung der Speicherelemente und/oder der Laderichter kann das Fahrzeug mehrere Ventile zur Regelung des Kühlmitteldurchflusses durch die Wärmetauscher der Speicherelemente und/oder der Laderichter aufweisen, welche, von der zentralen Kühlanlage ausgehend, vor den Wärmetauschern der Speicherelemente und/oder vor den Wärmetauschern der Laderichter angeordnet sind. Insbesondere ist jeweils ein Ventil vor jedem Wärmetauscher angeordnet. Es ist somit möglich, nicht nur die Speicherelemente und die Laderichter unterschiedlich, insbesondere entsprechend ihrer thermischen Belastung, gekühlt werden, sondern auch die Speicherelemente untereinander und die Laderichter untereinander. Eine optimale Betriebstemperatur der einzelnen Speicherelemente und/oder der Laderichter ist relativ einfach einstellbar.

Der zumindest eine Wärmetauscher des zumindest einen Energiespeichers und der zumindest eine Wärmetauscher des zumindest einen Laderichters sind im selben Kühlkreislauf angeordnet, wobei, von der zentralen Kühlanlage ausgehend, der Wärmetauscher des Laderichters vor dem Wärmetauscher des Energiespeichers angeordnet ist. Gemäß einer weiteren Weiterbildung ist dann zumindest ein Ventil zur Regelung der Kühlmittelzufuhr zum Wärmetauscher des Energiespeichers im Kühlkreislauf vorgesehen, welches, von der zentralen Kühlanlage ausgehend, nach dem Wärmetauscher des Laderichters und vor dem Wärmetauscher des Energiespeichers angeordnet ist. Das Ventil dient der Dosierung der Kühlmittelzufuhr und somit der Regelung der Temperatur des zumindest einen Energiespeichers und kann daher auch als Drossel bezeichnet werden.

Für Anwendungen mit höheren klimatischen Anforderungen bzw. höheren Anforderungen an den Energiespeicher wird erfindungsgemäß ein kompakt und kostengünstig herzustellendes Fahrzeug bereitgestellt. Eine erhöhte Anforderung an den Energiespeicher kann z.B. im oberleitungsfreien Betrieb liegen, in welchem das Fahrzeug seine Energie nur durch Aufladen an Ladestationen, welche in den Haltestellen befindlich sind, bezieht und ansonsten aus dem Speichersystem gespeist wird. Solche permanenten Lade- und Entladezyklen mit hohen Leistungen verursachen höhere Ladeverluste in den Speichern, was eine höhere Kühlleistung erfordert.

Die für die Energiespeicher verwendeten Speichermedien erfordern die Einhaltung enger Temperaturgrenzen. In Einsatzgebieten mit hohen Umgebungstemperaturen können dabei Lufttemperaturmaxima diese Temperaturgrenzen überschreiten, was eine Kühlung mit Wasser, kombiniert mit einer Rückkühlung des Kältekreislaufs mittels einer Kältemaschine erfordert.

Sind die Wärmetauscher des Energiespeichers und des Laderichters in einem gemeinsamen Kühlkreislauf angeordnet, kann auch zumindest ein zentrales Heizelement in dem Kühlkreislauf angeordnet sein, um den Energiespeicher und/oder den Laderichter auf eine vorgegebene Betriebstemperatur aufzuheizen. Alternativ könnte die zentrale Kühlanlage invers betrieben werden oder jedes Speicherelement und/oder jeder Laderichter könnte ein Heizelement in unmittelbarer Umgebung aufweisen. Allgemein kann ein elektrischer Antrieb auch als zusätzlicher Antrieb, wie beispielsweise bei einem Hybridantrieb, oder als Hilfsantrieb eingesetzt werden. Der elektrische Antrieb umfasst insbesondere zumindest einen Elektromotor, insbesondere jedoch mehrere Elektromotoren, zum Antrieb des Fahrzeugs. Das Fahrzeug wird weitergebildet ausschließlich mittels des elektrischen Antriebs, insbesondere mittels des zumindest einen Elektromotors, insbesondere mittels der mehreren Elektromotoren des elektrischen Antriebs angetrieben. Bei dem Fahrzeug handelt es sich insbesondere um ein großräumiges Fahrzeug zum Transport von Personen oder Gütern. Weitergebildet ist das Fahrzeug ein Schienenfahrzeug des Personenverkehrs, insbesondere ein zumindest zwei- oder mehrteiliges Schienenfahrzeug, z.B. eine Niederflurstraßenbahn. Der zumindest eine Energiespeicher kann die Energie zum Betrieb des zumindest einen Elektrischen Antriebs und damit zum Antrieb des Schienenfahrzeugs bereitstellen und ist entsprechend dimensioniert und ausgelegt. Im Unterschied zu analogen Systemen eines Personenkraftwagens, beispielsweise mit Hybridantrieb mit einem entsprechenden Elektromotor als elektrischem Antrieb und einem Energiespeicher, sind die von dem Energiespeicher und dem Laderegler aufgenommenen elektrischen Leistungen deutlich erhöht. Entsprechend leistungsfähigere und komplexere Systeme sind vorzusehen, insbesondere für einen autarken Antrieb mittels des Energiespeichers, bei, insbesondere ausschließlich, punktueller Aufladung des Energiespeichers. Anfahr- und Bremsvorgänge finden häufig mit weitgehender und gar vollständiger Entladung eines oder mehrerer Speicherelemente des Energiespeichers statt. Die Häufigkeit von vollständigen Auflade- und Entladevorgängen ist bei genannten Personenkraftwagen vergleichsweise reduziert. Daneben sind die räumlichen Verhältnisse in einem gegebenenfalls mehrteiligen Schienenfahrzeug mit einem auf die Fahrzeugteile verteiltem Antrieb deutlich zu unterscheiden von den räumlichen Verhältnisse in einem Personenkraftwagen. Allein die zur Kühlung der Nutzräume für Passagiere vorgesehenen Kühlanlagen eines Schienenfahrzeugs des Personenverkehrs weichen in ihrem Dimensionen deutlich von den Kühlanlagen eines Personenkraftwagens ab. Je nach den räumlichen bzw. physikalischen Gegebenheiten sind darüber hinaus die Geräte für Traktion, Energiespeicherung, Bordnetzversorgung und/oder Klimatisierung räumlich voneinander zu trennen.

Ein Laderichter, ein Gleichstromsteller mit der Funktion eines Ladereglers, ist geeignet zur Regelung einer Auf- und Entladung des zumindest einen Energiespeichers und ist entsprechend ausgestaltet. Zur Aufladung des zumindest einen Energiespeichers ist der zumindest eine Laderichter zwischen das ortsfeste Stromnetz und den Energiespeicher geschaltet, zur Entladung ist der zumindest eine Laderichter zwischen den zumindest einen Energiespeicher und den zumindest einen elektrischen Antrieb des Fahrzeugs geschaltet.

Neben dem zumindest einen Laderichter kann das Fahrzeug weitere leistungselektronische Geräte zur Spannungsumformung für die Speisung von Bordnetzen umfassen, wie z.B. zumindest einen Bordnetzumrichter und/oder zumindest ein Ladegerät für eine gegebenenfalls vorhandene Bordnetzbatterie und/oder zumindest einen Traktionsstromrichter. Vorteilhaft bezüglich Einbauräume und Massen ist zur Kühlung des Bordnetzumrichters und/oder des Ladegeräts für die Bordnetzbatterie und/oder des Traktionsstromrichters mindestens ein Wärmetauscher, insbesondere jeweils mindestens ein Wärmetauscher, im zumindest einen Kühlkreislauf angeordnet. Diese Wärmetauscher sind dabei in weiteren, separaten Kühlkreisläufen oder in einem weiteren, separaten, zweiten Kühlkreislauf angeordnet oder sie sind im selben Kühlkreislauf des Laderichters angeordnet, insbesondere, von der zentralen Kühlanlage aus gesehen, vor dem zumindest einen Wärmetauscher des Energiespeichers. Sie können alternativ wiederum auf einer Kühlplatte, insbesondere einer mit den Laderichtern gemeinsamen Kühlplatte, angeordnet sein. Der Bordnetzumrichter dient zur Umwandlung der elektrischen Energie des ortsfesten Stromnetzes, beispielsweise einer 750 V Gleichspannung, in eine Bordnetzspannung, beispielsweise einem 460 V Dreiphasenwechselstrom. Das Ladegerät für die Bordnetzbatterie dient analog zur Umwandlung der Netzspannung des ortsfesten Stromnetzes, beispielsweise einer 750 V Gleichspannung, in eine andere Gleichspannung, beispielsweise einer 24 V Gleichspannung. Der Laderichter wiederum wandelt die Netzspannung in eine vorgegebene Ladespannung für den zumindest einen Energiespeicher. Bei einer Bordnetzbatterie handelt es sich um einen weiteren Energiespeicher, der von der Wirkungsweise vom Energiespeicher für den elektrischen Antrieb zu unterscheiden ist. Der Wärmetauscher des Bordnetzumrichters kann in diesen integriert sein. Analog kann es sich auch beim Ladegerät und dem Wärmetauscher des Ladegeräts für die Bordnetzbatterie um ein integriertes Bauteil handeln.

Gemäß einer weiteren Weiterbildung umfasst das Fahrzeug weiterhin zumindest ein passives, induktives Leistungsbauteil umfasst, welches in einem Luftstrom, von einem Gebläse der zentralen Kühlanlage ausgehend, nach einem Kondensator der zentralen Kühlanlage angeordnet ist. Der Luftstrom wird durch den Kondensator nur leicht erwärmt, beispielsweise um 20 K - 30 K. Diese Temperaturerhöhung ist tolerabel. Die Nutzung des Abluftstroms des Kondensators spart dabei die Anordnung weiterer separater Gebläse, und damit Raum, Gewicht, Kosten und reduziert zudem die Geräuschentwicklung.

Durch die Kühlung mit flüssigem Kühlmittel ist mit einer deutlichen Reduktion des Geräuschpegels durch das Einsparen mehrerer Gebläse und Lüfter im Vergleich zur Luftkühlung von Laderichtern, Bordnetzumrichtern, Ladegerät für die Bordnetzbatterie, Traktionsstromrichter und/oder Leistungsbauteilen zu rechnen, wodurch auch deren Zuverlässigkeit und Verfügbarkeit verbessert ist, insbesondere in staubigen oder sandigen Umgebungen. Die Energieeffizienz der Kühlung ist zudem erhöht.

Weitergebildet sind die zentrale Kühlanlage und die Laderichter, und insbesondere die Wärmetauscher der Laderichter, in einem gemeinsamen Gehäuse, beispielsweise einem Gerätecontainer auf dem Dach des Fahrzeugs, angeordnet. Diese Konzentration kann zu einer Raumersparnis führen.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.

Bei dem erfindungsgemäßen Fahrzeug handelt es sich insbesondere um ein Schienenfahrzeug, insbesondere des Personenverkehrs, beispielsweise eine Niederflur-Straßenbahn, oder es ist ein Personentransport- oder Nutzfahrzeug für die Straße, wie beispielsweise ein Omnibus oder ein Lastkraftwagen.

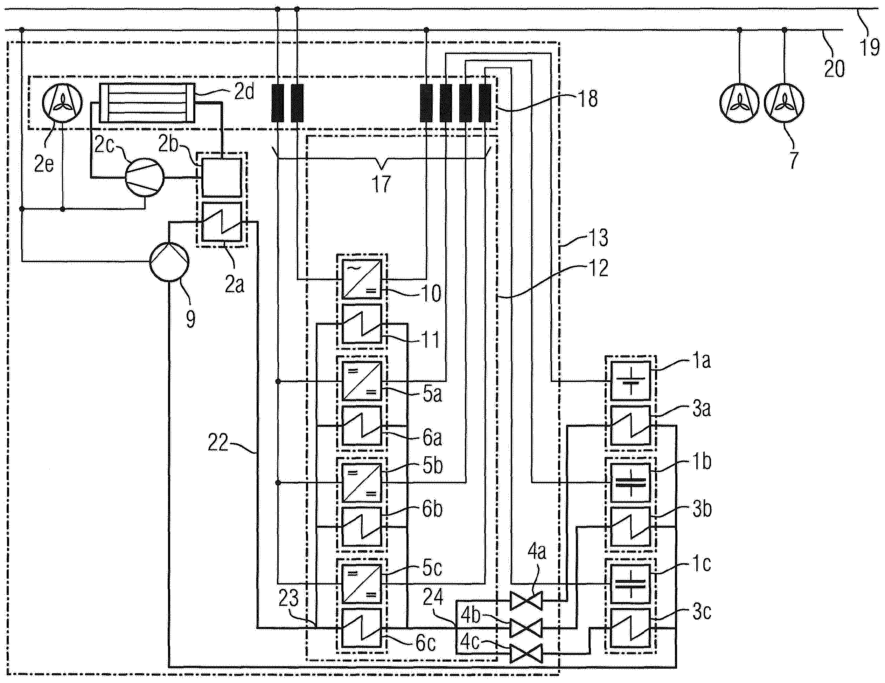

In der Figur ist ein Schaltplan einer Ausführungsform zur erfindungsgemäßen Kühlung eines Fahrzeugs schematisch dargestellt. Das Fahrzeug umfasst neben einem hier nicht veranschaulichten Elektrischen Antrieb einen Energiespeicher, hier umfassend die Speicherelemente 1a, 1b und 1c, und zur geregelten Auf- und insbesondere auch Entladung der Speicherelemente 1a, 1b, 1c Laderichter 5a, 5b und 5c. Das Speicherelement 1a ist hier eine Batterie, die Speicherelemente 1b und 1c sind hier als kapazitive Speicher ausgebildet.

Das Fahrzeug weist zur Kühlung sowohl der Speicherelemente 1a, 1b und 1c, als auch der Laderichter 5a, 5b und 5c eine zentrale Kühlanlage auf. In diesem Ausführungsbeispiel umfasst die zentrale Kühlanlage eine Kältemaschine mit einem Wärmetauscher 2a, einem Verdampfer 2b, einem Kompressor 2c, einem Kondensator 2d, und gegebenenfalls mit einer hier nicht dargestellten Drossel und mit einem Gebläse 2e. Der Wärmetauscher 2a ist dabei einerseits gekoppelt an den Verdampfer 2b. Eine Ausführung mit einem einfachen Wasser-Luft Wärmetauscher an Stelle des Wärmetauschers 2a ist jedoch ebenfalls möglich. Der Wärmetauscher 2a dient dem Austausch von thermischer Energie zwischen der Kältemaschine, insbesondere dem Verdampfer 2b, und einem geschlossenen Kühlkreislauf 22, an welchen der Wärmetauscher 2a andererseits gekoppelt ist. Der geschlossene Kühlkreislauf 22 umfasst Rohre, gefüllt mit einem flüssigen Kühlmittel.

Die Rohre des Kühlkreislaufs 22 führen das Kühlmittel zu den Wärmetauschern 6a, 6b und 6c, welche den Laderichtern 5a, 5b und 5c zugeordnet sind. Die Wärmetauscher 6a, 6b und 6c dienen daher zur Kühlung der jeweiligen Laderichter 5a, 5b und 5c. Da hier die Wärmetauscher 6a, 6b und 6c nicht in Reihe, sondern parallel zueinander geschaltet sind, weist der geschlossene Kühlkreislauf 22 Verzweigungen 23 auf. Der Kühlmittelfluss wird zunächst in einzelne Stränge aufgeteilt. Nach dem Durchfließen der Wärmetauscher 6a, 6b und 6c wird das Kühlmittel wieder zusammengeführt. Um den Kühlmitteldurchfluss durch die Wärmetauscher 6a, 6b und 6c und damit die Kühlmittelzufuhr zu den einzelnen Wärmetauschern 6a, 6b und 6c zu regeln, können Ventile in den einzelnen Strängen oder an den Verzweigungen 23 vorgesehen sein. Dies kann sinnvoll sein, wenn Laderichter oder Wärmetauscher räumlich getrennt sind oder die Verluste der Laderichter sich stark voneinander unterscheiden. was hier jedoch nicht vorgesehen ist.

Im Ausführungsbeispiel werden Speicher mit unterschiedlichen physikalischen Wirkprinzipien und Charakteristika gezeigt, deren Verlustleistung sich stark voneinander unterscheidet. Daher werden hier weiter stromabwärts Ventile 4a, 4b und 4c nach einer weiteren Verzweigung 24 des geschlossenen Kühlkreislaufs 22 in den einzelnen Strängen zu Wärmetauschern 3a, 3b und 3c angeordnet, um den Kühlmitteldurchfluss durch die Wärmetauscher 3a, 3b und 3c und damit die Kühlmittelzufuhr zu den einzelnen Wärmetauschern 3a, 3b und 3c zu regeln, welche Wärmetauscher 3a, 3b und 3c den Speicherelementen 1a, 1b und 1c zugeordnet sind, welche ihrerseits einer Kühlung der jeweiligen Speicherelemente 1a, 1b und 1c dienen. Auch hier werden nach Durchfluss der Wärmetauscher 3a, 3b und 3c die einzelnen Stränge wieder zusammengeführt, so dass, von einer Umwälzpumpe 9 im geschlossenen Kühlkreislauf 22 gefördert, das Kühlmittel anschließend in einem einzigen Strang durch den zentralen Wärmetauscher 2a geführt wird.

Das Kühlmittel fließt, ausgehend von der zentralen Kühlanlage, somit zunächst durch zumindest einen Wärmetauscher 6a, 6b oder 6c der Laderichter 5a, 5b und 5c, um anschließend durch zumindest einen Wärmetauscher 3a, 3b oder 3c der Speicherelemente 1a, 1b und 1c und wieder zurück zur zentralen Kühlanlage zu fließen. Daher wird von einem gemeinsamen Kühlkreislauf 22 für die Laderichter 5a, 5b und 5c und die Speicherelemente 1a, 1b und 1c gesprochen. Das Kühlmittel wird durch die Verlustleistungen der Laderichter also vorerwärmt, was in der Regel tolerabel ist, da die Verluste der Leistungselektronik klein sind gegenüber den Ladeverlustleistungen in den Speicherelementen.

Das Fahrzeug in diesem Ausgestaltungsbeispiel ist ein mehrteiliges Schienenfahrzeug des Personenverkehrs. Dieses wird aus ortsfesten Stromnetz 19 mit elektrischer Energie versorgt. Eine Verbindung zu diesem Stromnetz 19 wird über einen hier nicht gezeichneten Stromabnehmer hergestellt. Beispielsweise handelt es sich bei dem Stromnetz um ein 750 V Gleichspannungsnetz. Die Speicherelemente 1a, 1b und 1c sind über die Laderichter 5a, 5b und 5c und über weitere, insbesondere passive, induktive Leistungsbauteile 17, wie beispielsweise Übertrager oder Filterdrosseln, an das Stromnetz angeschlossen. Zur Energieversorgung von weiteren Verbrauchern, wie hier auch die elektrischen Verbraucher der zentralen Kühlanlage, dem Gebläse 2e oder dem Kompressor 2c, weist das Fahrzeug mindestens einen Bordnetzumrichter 10 auf, zur Umwandlung der Stromart des Stromnetzes in eine vorgegebene Stromart des Bordnetzes, beispielsweise einem 460 V Dreiphasenwechselstrom. Der Bordnetzumrichter 10 ist ebenfalls, gegebenenfalls über ein Leistungsbauteil 17, mit dem ortsfesten Stromnetz 19 verbunden.

Die passiven, induktiven Leistungsbauteile 17 sind in einem und gekühlt durch einen Luftstrom angeordnet, welcher vom Gebläse 2e der zentralen Kühlanlage erzeugt wird. Hierzu ist ein Luftkanal 18 zur Führung des Luftstroms vorgesehen. Dadurch kann auf weitere Gebläse verzichtet werden.

Neben dem Gebläse 2e oder dem Kompressor 2c der zentralen Kühlanlage sind Lüfter 7 für Traktionscontainer des Schienenfahrzeugs an das Bordnetz 20 angeschlossen. In den Traktionscontainern sind beispielsweise Traktionsumrichter untergebracht.

Zur Kühlung des Bordnetzumrichters 10 ist diesem hier ein Wärmetaucher 11 zugeordnet, welcher ebenfalls im geschlossen Kühlkreislauf 22 angeordnet ist. Entsprechend wird auch der Bordnetzumrichter 10 von der zentralen Kühlanlage gekühlt statt wie üblich platz- bzw. masseaufwendige Kühlkörper bzw. Gebläse zur Kühlung mit Luft zu verwenden. Der Bordnetzumrichter 10 und der Wärmetauscher 11 für den Bordnetzumrichter 10 sind in diesem Ausführungsbeispiel darüber hinaus auf gemeinsamer Kühlplatte 12 mit Wärmetauschern 6a, 6b und 6c Laderichtern 5a, 5b und 5c montiert.

Die zentrale Kühlanlage ist wiederum vorzugsweise zusammen mit dem Bordnetzumrichter 10 und dem Wärmetauscher 11 des Bordnetzumrichters 10, den Laderichtern 5a, 5b und 5c und den Wärmetauschern 6a, 6b und 6c der Laderichter 5a, 5b und 5c auf einem gemeinsamen Wagenteil, insbesondere in einem gemeinsamen Gehäuse 13, beispielsweise einem Gerätecontainer auf dem Dach des Schienenfahrzeugs, angeordnet, so dass aufwendige Wagenübergänge mit Schläuchen etc. vermieden werden.

Wird die zentrale Kühlanlage zur Kühlung des flüssigen Kühlmittels des Kühlkreislaufs 22 eingesetzt, bildet sie eine Wärmesenke, die zu kühlenden Speicherelemente 1a, 1b und 1c und Laderichter 5a, 5b und 5c bilden Wärmequellen, welche das Kühlmittel erwärmen. In einem möglichen Inversbetrieb, z.B. beim Abstellen oder Aufrüsten unter niedrigen Umgebungstemperaturen, kann die zentrale Kühlanlage hingegen eine Wärmequelle bilden und die Speicherelemente 1a, 1b und 1c über die Wärmetauscher 3a, 3b und 3c die Wärmesenke, womit sie in ihrem optimalen Arbeitstemperaturbereich gehalten werden. Ebenfalls möglich ist die Anordnung eines Heizelements 8 im Kühlkreislauf, insbesondere nach dem zentralen Wärmetauscher 2a und vor den Wärmetauschern 3a, 3b oder 3c der Speicherelemente 1a, 1b und 1c und/oder vor den Wärmetauschern 6a, 6b und 6c der Laderichter 5a, 5b und 5c.

## Patentansprüche

1. Fahrzeug mit zumindest einem elektrischen Antrieb, zumindest einem Energiespeicher (1a, 1b, 1c) zur Energieversorgung des elektrischen Antriebs und zumindest einem Stromabnehmer zur Aufladung des Energiespeichers (1a, 1b, 1c) mit elektrischer Energie aus einem ortsfesten Stromnetz (19), mit welchem Stromabnehmer der zumindest eine Energiespeicher (1a, 1b, 1c) über zumindest einen Laderichter (5a, 5b, 5c) zur geregelten Aufladung des zumindest einen Energiespeichers (1a, 1b, 1c) verbunden ist, **dadurch gekennzeichnet, dass** das Fahrzeug zur Kühlung des zumindest einen Energiespeichers (1a, 1b, 1c) und des zumindest einen Laderichters (5a, 5b, 5c) eine zentrale Kühlanlage (2a) und zumindest einen geschlossenen Kühlkreislauf (22) mit flüssigem Kühlmittel umfasst, wobei der zumindest eine Kühlkreislauf (22) mindestens einen Wärmetauscher (3a, 3b, 3c) für den zumindest einen Energiespeicher (1a, 1b, 1c) und mindestens einen Wärmetauscher (6a, 6b, 6c) für den zumindest einen Laderichter (5a, 5b, 5c) umfasst, wobei der mindestens eine Wärmetauscher (6a, 6b, 6c) des zumindest einen Laderichters (5a, 5b, 5c), von der zentralen Kühlanlage ausgehend, vor dem mindestens einen Wärmetauscher (3a, 3b, 3c) des zumindest einen Energiespeichers (1a, 1b, 1c) angeordnet ist.

2. Fahrzeug nach einem der Anspruch 1, **dadurch gekennzeichnet, dass** es zumindest ein Ventil (4a, 4b, 4c) umfasst, welches zur Regelung eines Kühlmitteldurchflusses durch zumindest einen Wärmetauscher, von der zentralen Kühlanlage aus gesehen, vor dem zumindest einen Wärmetauscher im Kühlkreislauf angeordnet ist.

3. Fahrzeug nach einem der Ansprüche 1 oder 2, **dadurch gekennzeichnet, dass** es mehrere Wärmetauscher (6a, 6b, 6c) für den zumindest einen Laderichter (5a, 5b, 5c) umfasst und/oder, dass es mehrere Wärmetauscher (3a, 3b, 3c) für den zumindest einen Energiespeicher (1a, 1b, 1c) umfasst.

4. Fahrzeug nach einem der Ansprüche 1 bis 3, **dadurch gekennzeichnet, dass** es zumindest einen Bordnetzumrichter (10) umfasst, wobei das Fahrzeug zur Kühlung des Bordnetzumrichters (10) mindestens einen Wärmetauscher (11) im zumindest einen Kühlkreislauf umfasst.

5. Fahrzeug nach Anspruch 4, **dadurch gekennzeichnet, dass** der Wärmetauscher (11) des Bordnetzumrichters (10) identisch ist mit dem Wärmetauscher des Laderichters.

6. Fahrzeug nach einem der Ansprüche 1 bis 5, **dadurch gekennzeichnet, dass** im zumindest einen Kühlkreislauf ein Heizelement (8) zum Aufheizen des flüssigen Kühlmittels angeordnet ist.

7. Fahrzeug nach einem der Ansprüche 1 bis 6, **dadurch gekennzeichnet, dass** die zentrale Kühlanlage zumindest einen Kondensator (2d), mindestens einen Kompressor (2c) und mindestens einen Verdampfer (2b) umfasst.

8. Fahrzeug nach einem der Ansprüche 1 bis 7, **dadurch gekennzeichnet, dass** die zentrale Kühlanlage und der zumindest eine Laderichter in einem gemeinsamen Gerätecontainer des Fahrzeugs angeordnet sind.

9. Fahrzeug nach einem der Ansprüche 1 bis 8, **dadurch gekennzeichnet, dass** es zumindest ein passives, induktives Leistungsbauteil (17) umfasst, welches in einem Luftstrom, von einem Gebläse (2e) der zentralen Kühlanlage ausgehend, nach einem Kondensator (2d) der zentralen Kühlanlage angeordnet ist.

## Claims

1. Vehicle comprising at least one electric drive, at least one energy accumulator (1a, 1b, 1c) for supplying the electric drive with energy and at least one current collector for charging the energy accumulator (1a, 1b, 1c) with electrical energy from a stationary power network (19), to which current collector the at least one energy accumulator (1a, 1b, 1c) is connected via at least one charge converter (5a, 5b, 5c) for controlled charging of the at least one energy accumulator (1a, 1b, 1c), **characterized in that** the vehicle comprises a central cooling system (2a) and at least one closed cooling circuit (22) with liquid coolant in order to cool the at least one energy accumulator (1a, 1b, 1c) and the at least one charge converter (5a, 5b, 5c), wherein the at least one cooling circuit (22) comprises at least one heat exchanger (3a, 3b, 3c) for the at least one energy accumulator (1a, 1b, 1c) and at least one heat exchanger (6a, 6b, 6c) for the at least one charge converter (5a, 5b, 5c), wherein the at least one heat exchanger (6a, 6b, 6c) of the at least one charge converter (5a, 5b, 5c) is arranged before the at least one heat exchanger (3a, 3b, 3c) of the at least one energy accumulator (1a, 1b, 1c), starting from the central cooling system.

2. Vehicle according to Claim 1, **characterized in that**, in order to control a coolant flow through at least one heat exchanger, the vehicle comprises at least one valve (4a, 4b, 4c), which is arranged in the cooling circuit before the at least one heat exchanger, as considered from the central cooling system.

3. Vehicle according to one of Claims 1 and 2, **characterized in that** it comprises a plurality of heat exchangers (6a, 6b, 6c) for the at least one charge converter (5a, 5b, 5c), and/or **in that** it comprises a plurality of heat exchangers (3a, 3b, 3c) for the at least one energy accumulator (1a, 1b, 1c).

4. Vehicle according to one of Claims 1 to 3, **characterized in that** it comprises at least one on-board network converter (10), wherein, in order to cool the on-board network converter (10), the vehicle comprises at least one heat exchanger (11) in the at least one cooling circuit.

5. Vehicle according to Claim 4, **characterized in that** the heat exchanger (11) of the on-board network converter (10) is identical to the heat exchanger of the charge converter.

6. Vehicle according to one of Claims 1 to 5, **characterized in that** a heating element (8) for heating the liquid coolant is arranged in at least one cooling circuit.

7. Vehicle according to one of Claims 1 to 6, **characterized in that** the central cooling system comprises at least one capacitor (2d), at least one compressor (2c) and at least one evaporator (2b).

8. Vehicle according to one of Claims 1 to 7, **characterized in that** the central cooling system and the at least one charge converter are arranged in a common device container of the vehicle.

9. Vehicle according to one of Claims 1 to 8, **characterized in that** it comprises at least one passive, inductive power component (17), which is arranged in an airflow after a capacitor (2d) of the central cooling system, starting from a fan (2e) of the central cooling system.

## Revendications

1. Véhicule comprenant au moins une traction électrique, au moins un accumulateur (1a, 1b, 1c) d'énergie pour alimenter en énergie la traction électrique et au moins un appareil de prise de courant pour charger l'accumulateur (1a, 1b, 1c) d'énergie d'énergie électrique à partir d'un réseau (19) de courant à poste fixe, le au moins un accumulateur (1a, 1b, 1c) d'énergie étant, par au moins un régulateur (5a, 5b, 5c) de charge pour réguler la charge du au moins un accumulateur (1a, 1b, 1c) d'énergie, relié à l'appareil de prise de courant, **caractérisé en ce que** le véhicule comprend, pour refroidir le au moins un accumulateur (1a, 1b, 1c) d'énergie et le au moins un régulateur (5a, 5b, 5c) de charge, une installation (2a) centrale de refroidissement et au moins un circuit (22) fermé de refroidissement à fluide de refroidissement liquide, le au moins un circuit (22) de refroidissement, comprenant au moins un échangeur de chaleur (3a, 3b, 3c) pour le au moins un accumulateur (1a, 1b, 1c) d'énergie et au moins un échangeur de chaleur (6a, 6b, 6c) pour le au moins un régulateur (5a, 5b, 5c) de charge, le au moins un échangeur de chaleur (6a, 6b, 6c) du au moins un régulateur (5a, 5b, 5c) de charge étant disposé, en partant de l'installation centrale de refroidissement, avant le au moins un échangeur de chaleur (3a, 3b, 3c) du au moins un accumulateur (1a, 1b, 1c) d'énergie.

2. Véhicule suivant la revendication 1, **caractérisé en ce qu'**il comprend au moins une vanne (4a, 4b, 4c), qui, pour réguler un débit de fluide de refroidissement dans au moins un échangeur de chaleur, est disposée dans le circuit de refroidissement, considéré depuis l'installation centrale de refroidissement, avant le au moins un échangeur de chaleur.

3. Véhicule suivant l'une des revendications 1 ou 2, **caractérisé en ce qu'**il comprend plusieurs échangeurs de chaleur (6a, 6b, 6c) pour le au moins un régulateur (5a, 5b, 5c) de charge et/ou **en ce qu'**il comprend plusieurs échangeurs de chaleur (3a, 3b, 3c) pour le au moins un accumulateur (1a, 1b, 1c) d'énergie.

4. Véhicule suivant l'une des revendications 1 à 3, **caractérisé en ce qu'**il comprend au moins un convertisseur (10) de réseau de bord, le véhicule comprenant, dans le au moins un circuit de refroidissement, au moins un échangeur de chaleur (11) pour refroidir le convertisseur (10) du réseau de bord.

5. Véhicule suivant la revendication 4, **caractérisé en ce que** l'échangeur de chaleur (11) du convertisseur (10) du réseau de bord est le même que l'échangeur de chaleur du régulateur de charge.

6. Véhicule suivant l'une des revendications 1 à 5, **caractérisé en ce qu'**un élément (8) de chauffage, pour chauffer le fluide de refroidissement liquide, est monté dans au moins un circuit de refroidissement.

7. Véhicule suivant l'une des revendications 1 à 6, **caractérisé en ce que** l'installation centrale de refroidissement comprend au moins un condenseur (2d), au moins un compresseur (2c) et au moins un évaporateur (2b).

8. Véhicule suivant l'une des revendications 1 à 7, **caractérisé en ce que** l'installation centrale de refroidissement et le au moins un régulateur de charge dont disposés dans un réceptacle d'appareil commun du véhicule.

9. Véhicule suivant l'une des revendications 1 à 8, **caractérisé en ce qu'**il comprend au moins un composant (17) de puissance inductif passif, qui est disposé dans un courant d'air partant d'une soufflante (2^{e}) de l'installation centrale de refroidissement, après un condenseur (2d) de l'installation centrale de refroidissement.
